# EUROPÄISCHE PATENTSCHRIFT

(11) **EP 1 883 679 B1**
(45) Veröffentlichungstag und Bekanntmachung des Hinweises auf die Patenterteilung: **13.10.2010**
(21) Anmeldenummer: 06724403.8
(22) Anmeldetag: 19.04.2006
(51) Int. Cl.: C09D 5/00, C08F 8/00, C23C 22/00

(54) **LACKSCHICHTBILDENDES KORROSIONSSCHUTZMITTEL UND VERFAHREN ZU DESSEN STROMFREIER APPLIKATION**
CORROSION-PROTECTION AGENT FORMING A LAYER OF PAINT AND METHOD FOR CURRENT-FREE APPLICATION THEREOF
AGENT ANTICORROSION FORMANT UNE COUCHE DE VERNIS ET PROCEDE POUR SON APPLICATION SANS COURANT

(30) Priorität: 23.05.2005 DE 102005023728
(43) Veröffentlichungstag der Anmeldung: 06.02.2008
(73) Patentinhaber: BASF Coatings GmbH, 48165 Münster (DE)
(72) Erfinder: DORNBUSCH, Michael, 48167 Münster (DE)
(74) Vertreter: Fischer, Jens-Dieter W.E.
(86) Internationale Anmeldenummer: PCT/EP2006/003545
(87) Internationale Veröffentlichungsnummer: WO 2006/125498

(56) Entgegenhaltungen:
- US-A1- 2003 187 145

## Beschreibung

Verfahren und Beschichtungsmittel zur stromfreien Korrosionsschutzbeschichtung verschiedener Metallsubstrate sind bekannt. Sie bieten im Vergleich zur anodischen oder kathodischen Tauchlackierung (ATL beziehungsweise KTL), bei welchen das Anlegen elektrischer Spannungen notwendig ist, insbesondere den Vorteil des einfacheren und preiswerteren Prozesses sowie der kürzeren Prozeßzeit. Insbesondere lassen sich mit den stromfreien Verfahren Hohlräume in beziehungsweise Kanten an den zu beschichtenden Substraten besser beschichten als mit Verfahren, bei denen das Anlegen elektrischer Spannungen notwendig ist.

Bei der stromfreien Korrosionsschutzbeschichtung, auch ACC-Verfahren (Autophoretic Chemical Coating) genannt, werden in der Regel Polymerisate, beispielsweise Emulsionspolymerisate enthaltend Acrylate oder Styrol/Butadien, eingesetzt, die anionisch stabilisiert sind. Gegenüber den vorgenannten ATL- und KTL-Verfahren weisen die ACC-Verfahren jedoch den Nachteil auf, daß die abgeschiedenen Schichten Fehlstellen aufweisen, die das Substrat deutlich korrosionsanfälliger machen. Daher werden solche mittels ACC-Verfahren abgeschiedenen Schichten in der Regel durch Nachspülen mit chromhaltigen wäßrigen Beschichtungsmitteln bearbeitet, um den Korrosionsschutz an den Fehlstellen zu verbessern. In jüngerer Zeit hat es sich jedoch herausgestellt, daß chromhaltige Beschichtungsmittel große Probleme bei der Umweltverträglichkeit aufweisen sowie als hochgradig gesundheitsgefährdend einzustufen sind. Daher ist man bestrebt; Chrom in Korrosionsschutzbeschichtungen vollständig zu ersetzen.

In der Folge der Entwicklung chromfreier Beschichtungsmittel wurde weiterhin festgestellt, daß ACC-Beschichtungsmittel enthaltend Salze der Lanthanid- sowie der d-Elemente sowie eine organische filmbildende Komponente ebenfalls einen sehr guten, den chromhaltigen Beschichtungsmitteln vergleichbaren Korrosionsschutz gewährteisten.

In WO-A-01/86016 wird ein Korrosionsschutzmittel beschrieben, das eine Vanadium-Komponente und eine weitere Komponente enthält, die mindestens ein Metall ausgewählt aus der Gruppe Zirkon, Titan, Molybdän, Wolfram, Mangan und Cer enthält. Um eine gute Stabilität und Korrosionsschutzwirkung des Konversionsschutzmittels zu gewährleisten, muß ein bestimmtes Verhältnis von tri- und tetravalentem Vanadium zum gesamten Vanadiumgehalt eingestellt werden sowie optional eine organische Verbindung zugegeben werden. Die organische Verbindung dient primär der Reduktion der pentavalenten Vanadiumverbindungen und kann Polymere, wie beispielsweise Polyvinylalkohol, Polyethylenglykol, Polyacrylsäure, Polyacrylamid sowie Polyethylenimin umfassen. Die Wirkung des in WO-A-01/86016 beschriebenen Korrosionsschutzmittel beruht im wesentlichen auf einem bestimmtes Verhältnis von tri- und tetravalentem Vanadium zum gesamten Vanadiumgehalt, welcher vergleichsweise aufwendig eingestellt werden muß. Beispielhaft wird dies durch eine Mischung von Vanadiumverbindungen mit unterschiedlichen Oxidationsstufen des Vanadiums erreicht. Nachteilig bei Korrosionsschutzmitteln gemäß WO-A-01/86016 ist die Tendenz der aus dem Substrat gebildeten Metallionen durch die abgeschiedene Korrosionsschutzschicht zu wandern, da die Polymerisate zu einer mangelhaften Filmbildung führen.

In WO-A-99/29927 wird ein chromfreies wäßriges Korrosionsschutzmittel beschrieben, das als Komponenten Hexafluoro-Anionen von Titan(IV) und/oder Zirkon(IV), Vanadiumionen, Übergangsmetallionen sowie Phosphor- und/oder Phosphonsäure enthält. In einer bevorzugten Ausführungsform enthält das in WO-A-99/29927 beschriebene Korrosionsschutzmittel zusätzlich einen organischen Filmbildner, insbesondere auf Polyacrylat-Basis, welcher vorzugsweise vernetzbar ist. Die Vernetzung kann durch unterschiedliche reaktive Gruppen im Filmbildner selbst oder durch Zusatz von Härtern, die auf den Filmbildner abgestimmt sind erfolgen. Als vorteilhaft wird das Aufbringen einer anorganischen Passivierschicht und einer organischen Polymerschicht im gleichen Behandlungsschritt beschreiben, wobei ein ausreichender Korrosionsschutz erzielt wird. Nachteilig bei Korrosionsschutzmitteln gemäß WO-A-99/29927 ist die Tendenz der aus dem Substrat gebildeten Metallionen durch die abgeschiedene Korrosionsschutzschicht zu wandern, da die Polymerisate zu einer mangelhaften Filmbildung führen, sowie die Verwendung von ökologisch kritischen Substanzen, wie insbesondere Fluoride.

WO-A-96110461 beschreibt ein wäßriges Korrosionsschutzmittel, das als Komponenten Anionen mit einem Zentralatom, ausgewählt aus der Gruppe Titan, Zirkon, Hafnium, Silizium. und mindestens 4 Fluoratomen als Liganden und eine organische Polymerdispersion enthält. Als erfindungsgemäße Vorteile werden insbesondere die Chromfreiheit und der Einstufenprozeß bei der Beschichtung beschrieben.

Von Nachteil bei der Erfindung gemäß WO-A-96/10461 ist, daß bei der Abscheidung des Korrosionsschutzmittels auf der Substratoberfläche die Polymerdispersionspartikel ausflocken und eine geringe Kontaktfläche zur Oberfläche ausbilden. Weiterhin haben die Latexpartikel den Nachteil, bei der Diffusion in Hohlräume oder an Kanten von dreidimensional ausgeprägten Substraten im Vergleich zu molekulardispers verteilten Polymerisaten eine geringere Wanderungsgeschwindigkeit zu haben. Zudem werden Schichten einer Dicke zwischen 1 Mikrometer und 1 mm ausgebildet, was einen entsprechenden Materialbedarf pro Flächeneinheit des zu beschichtenden Substrats bedingt. Weiterhin nachteilig ist die Tendenz der aus dem Substrat gebildeten Metallionen durch die abgeschiedene Korrosionsschutzschicht zu wandern sowie die Verwendung von ökologisch kritischen Substanzen, wie insbesondere Fluoriden.

DE-A-37 27 382 umfaßt chromfreie wäßrige Dispersionen von Addukten von Carbonsäuren und Isocyanaten an Epoxide, welche zur autophoretischen Beschichtung metallischer Oberflächen geeignet sind. Solche Dispersionen weisen in dispergierter Form einem Teilchendurchmesser von weniger als 300, bevorzugt zwischen 100 und 250 nm auf und können nach Abscheidung auf der Metalloberfläche bei Temperaturen zwischen 60 und 200 °C vernetzt werden. Für die Vernetzung werden die üblichen, aus der autophoretischen Abscheidung bekannten Starter, wie insbesondere das System HF/FeF₃, verwendet. Die in DE-A-37 27 382 beschriebenen Beschichtungen weisen einen guten Korrosionsschutz auf und sind darüber hinaus noch lösemittelbeständig.

Auch solche Latexpartikel haben den Nachteil, bei der Diffusion in Hohlräume oder an Kanten von dreidimensional ausgeprägten Substraten im Vergleich zu molekulardispers verteilten Polymerisaten eine geringere Wanderungsgeschwindigkeit zu haben. Zudem werden Schichten einer Dicke zwischen 1 Mikrometer und 1 mm ausgebildet, was einen entsprechenden Materialbedarf pro Flächeneinheit des zu beschichtenden Substrats bedingt. Weiterhin nachteilig ist die Tendenz der aus dem Substrat gebildeten Metallionen durch die abgeschiedene Korrosionsschutzschicht zu wandern sowie die Verwendung von ökologisch kritischen Substanzen, wie insbesondere Fluoriden.

In US 200310187145 A1 werden Beschichtungsmittel beschrieben, die zwar auch auf Metall aufgetragen werden können (In US 2003/0187145 A1, [0112]), bei denen aber keine Korrosionsschutzwirkung beschrieben wird. Bevorzugt werden in In US 2003/0187145 A1 Beschichtungsmittel beschrieben, die als Basislack und/oder Klarlacke bei der Automobilserienlackierung (In US 2003/0187145 A1, [0116]) eingesetzt werden, wobei solche Beschichtungsmittel nicht direkt auf Metallsubstrate appliziert werden, sondern auf weiteren Lackschichten versehene Substrate in größeren Schichtdicken als dies bei der Korrosionsschutzausrüstung üblich ist (beispielsweise In US 2003/0187145 A1, [0121]).

### Aufgabe und Lösung

Im Lichte des vorgenannten Standes der Technik, war es die Aufgabe der Erfindung, ein ökologisch weitgehend unbedenkliches Korrosionsschutz-verfahren zu finden. Insbesondere sollte das Korrosionsschutz-verfahren die Wanderung der aus dem Substrat gebildeten Metallionen weitgehend unterbinden sowie gut an Kanten und in Hohlräume des Substrats abgeschiedenen werden: Desweiteren sollte der Einfluß von Fremdmetallionen möglichst gering gehalten werden und mit vergleichsweise geringem Materialeinsatz ein wirksamer Korrosionsschutz erzielt werden. Weiterhin sollte das Konversionsschutzmittel für möglichst viele unterschiedliche Metallsubstrate einen wirksamen Schutz entwickeln und weitgehend unabhängig vom Redoxpotential des zu beschichtenden Substrats sein.

Im Lichte der vorgenannten Aufgaben wurde überraschenderweise ein Korrosionsschutzverfahren gefunden bei welchem das Substrat vor Abscheidung eines Beschichtungsmittels EK in einem weiteren vorgeschalteten Verfahrensschritt mit einem Korrosionsschutzmittel K vorbehandelt wird.

### Beschreibung der Erfindung

### Das Beschichtungsmittel EK

Die wasserdispergierbaren und/oder wasserlöslichen Polymerisate P des Beschichtungsmittels EK tragen Liganden A, welche mit den bei der Korrosion des Substrats freigesetzten Metallionen Chelate bilden, und vernetzende funktionelle Gruppen B, die mit sich selbst und/oder mit weiteren funktionellen Gruppen C an Vemetzem V kovalente Bindungen ausbilden können.

Im Sinne der Erfindung wasserdispergierbar oder wasserlöslich bedeutet, daß die Polymerisate P in der wäßrigen Phase Aggregate mit einem mittleren Teilchendurchmesser von < 50, bevorzugt < 35 nm und besonders bevorzugt < 20 Nanometer ausbilden beziehungsweise molekulardispers gelöst sind. Damit unterscheiden sich solche Aggregate in ihrem mittleren Teilchendurchmesser maßgeblich von Dispersionsteilchen, wie sie beispielsweise in DE-A-37 27 382 oder WO-A-96/10461 beschrieben werden. Molekulardispers gelöste Polymerisate P weisen in der Regel Molekulargewichte von < 100.000, bevorzugt < 50.000, besonders bevorzugt < 20.000 Dalton auf.

Die Größe der Aggregate bestehend aus Polymerisat P wird in an sich bekannter Weise durch Einführung von hydrophilen Gruppen HG am Polymerisat P bewerkstelligt. Die Zahl der hydrophilen Gruppen HG am Polymerisat P hängt vom Solvatationsvermögen und der sterischen Zugänglichkeit der Gruppen HG ab und kann vom Fachmann ebenfalls in an sich bekannter Weise eingestellt werden. Bevorzugte hydrophile Gruppen HG am Polymerisat P sind Sulfat- Phosphat-, Phosphonat-, Amin-, Amid- und/oder Carboxylatgruppen, insbesondere Amin- und/oder Phosphonatgruppen.

Als Polymerrückgrat der Polymerisate P können an sich beliebige Polymerisate eingesetzt werden, vorzugsweise solche mit Molekulargewichten von 1.000 bis 50.000 Dalton, besonders bevorzugt mit Molekulargewichten von 2.000 bis 20.000 Dalton. Als Polymerrückgrat werden bevorzugt Polyolefine oder Poly(meth)acylate, Polyurethane, Polyalkylenimine, Polyvinylamine, Polyalkylenimine, Polyether, Polyester und Polyalkohole, welche insbesondere teilacetalisiert und/oder teilverestert sind, eingesetzt. Die Polymerisate P können linear, verzweigt und/oder dendritisch aufgebaut sein. Ganz besonders bevorzugte Polymerrückgrate sind Polyalkylenimine, Polyvinylamine, Polyalkohole, Poly(meth)acrylate sowie hyperverzweigte Polymerisate, wie sie beispielsweise in WO-A-01/46296 beschrieben sind.

Die Polymerisate P sind vorzugsweise im sauren pH-Bereich hydrolysestabil, insbesondere bei pH-Werten < 5, besonders bevorzugt bei pH-Werten <3.

Als Liganden A sind alle Gruppen oder Verbindungen geeignet, welche mit den bei der Korrosion des Substrats freigesetzten Metallionen Chelate bilden können. Bevorzugt sind ein- und/oder mehrzähnige potentiell anionische Liganden. Besonders bevorzugte Liganden sind
- gegebenenfalls funktionalisierte Harnstoffe und/oder Thioharnstoffe, insbesondere Acylthioharnstoffe wie beispielsweise Benzoylthioharnstoff,
- gegebenenfalls funktionalisierte Amine und/oder Polyamine, wie insbesondere EDTA,
- gegebenenfalls funktionalisierte Amide, insbesondere Carbonsäureamide
- Imine und Imide, wie insbesondere iminfunktionalisierte Pyridine,
- Oxime, bevorzugt 1,2-Dioxime wie funktionalisiertes Diacetyldioxim,
- Organoschwefelverbindungen, wie insbesondere gegebenenfalls funktionalisierte Thiole wie Thioethanol, Thiocarbonsäuren, Thioaldehyde, Thioketone, Dithiocarbamate, Sulfonamide, Thioamide und besonders bevorzugt Sulfonate,
- Organophosphorverbindungen, wie insbesondere Phosphate, besonders bevorzugt Phosphorsäureester von (Meth)acrylaten, sowie Phosphonate, besonders bevorzugt Vinylphosphonsäure und hydroxy-, amino- und amidofunktionalisierte Phosphonate,
- gegebenenfalls funktionalisierte Organoborverbindungen, wie insbesondere Borsäureester,
- gegebenenfalls funktionalisierte Polyalkohole, wie insbesondere Kohlenhydrate und deren Derivate sowie Chitosane,
- gegebenenfalls funktionalisierte Säuren, wie insbesondere Di- und/oder oligofunktionelle Säuren, oder gegebenenfalls funktionalisierte (Poly)carbonsäuren, wie insbesondere Carbonsäuren, die ionisch und/oder koordinativ an Metallzentren gebunden werden können, bevorzugt (Poly)methacrylate mit Säuregruppen oder di- oder oligofunktionelle Säuren,
- gegebenenfalls funktionalisierte Carbene,
- Acetylacetonate,
- gegebenenfalls funktionalisierte Acetylene, sowie
- Phytinsäure und deren Derivate.

Als vernetzende funktionelle Gruppen B am Polymerisat P sind solche geeignet, die mit sich selbst und/oder mit komplementären funktionellen Gruppen B' kovalente Bindungen ausbilden können. Bevorzugt werden die kovalenten Bindungen thermisch und/oder durch Einwirkung von Strahlung ausgebildet. Besonders bevorzugt werden die kovalenten Bindungen thermisch ausgebildet. Die vemetzenden funktionellen Gruppen B und B' bewirken die Ausbildung eines intermolekularen Netzwerks zwischen den Molekülen des Polymerisats P.

Unter Einwirkung von Strahlung vernetzende funktionelle Gruppen B bzw. B' weisen aktivierbare Bindungen auf, wie beispielsweise Kohlenstoff-Wasserstoff-, Kohlenstoff-Kohlenstoff-, Kohlenstoff-Sauerstoff-, Kohlenstoff-Stickstoff-, Kohlenstoff-Phosphor- oder Kohlenstoff-Silizium-Einfach- oder Doppelbindungen. Hierbei sind besonders Kohlenstoff-Kohlenstoff-Doppelbindungen vorteilhaft. Besonders gut geeignete Kohlenstoff-Kohlenstoff-Doppelbindungen als Gruppen B sind
- besonders bevorzugt (Meth)acrylatgruppen
- Ethylacrylatgruppen
- Vinylether- und Vinylestergruppen
- Crotonat- und Cinnamatgruppen
- Allylgruppen
- Dicyclopentadienylgruppen
- Norbomyl- und lsoprenylgruppen
- Isopropenyl- oder Butenylgruppen.

Thermisch vernetzende funktionelle Gruppen B können mit sich selbst oder vorzugsweise mit komplementären vernetzenden funktionellen Gruppen B' unter Einwirkung von thermischer Energie kovalente Bindungen ausbilden.

Besonders gut geeignete thermisch vernetzende funktionelle Gruppen B und B' sind
- besonders bevorzugt Hydroxylgruppen
- Mercapto- und Aminogruppen,
- Aldehydgruppen,
- Azidgruppen,
- Säuregruppen, insbesondere Carbonsäuregruppen,
- Säureanhydridgruppen, insbesondere Carbonsäureanhydridgruppen,
- Säureestergruppen, insbesondere Carbonsäureestergruppen,
- Ethergruppen,
- besonders bevorzugt Carbamatgruppen,
- Harnstoffgruppen,
- Epoxidgruppen,
- besonders bevorzugt Isocyanatgruppen, welche ganz besonders bevorzugt mit Blockierungsmitteln umgesetzt sind, welche bei den Einbrenntemperaturen der erfindungsgemäßen Beschichtungsmitteln deblockieren und/oder ohne Deblockierung in das sich bildende Netzwerk eingebaut werden.

Besonders bevorzugte Kombinationen aus thermisch vernetzenden Gruppen B und komplementären Gruppen B' sind:
- Hydroxylgruppen mit Isocyanat- und/oder Carbamatgruppen,
- Aminogruppen mit Isocyanat- und/oder Carbamatgruppen,
- Carbonsäuregruppen mit Epoxidgruppen.

Als Vernetzer V mit thermisch und/oder durch Einwirkung von Strahlung vemetzenden Gruppen B und/oder B' sind prinzipiell alle dem Fachmann bekannten Vernetzer geeignet. Bevorzugt sind niedermolekulare oder oligomere Vernetzer V mit einem Molekulargewicht von < 20.000 Dalton, besonders bevorzugt < 10.000 Dalton. Das die vernetzenden Gruppen B und/oder B' tragende Rückgrat der Vernetzer V kann linear, verzweigt und/oder hyperverzweigt aufgebaut sein. Bevorzugt sind verzweigte und/oder hyperverzweigte Strukturen, insbesondere solche, wie sie beispielsweise in WO-A-01/46296 beschrieben sind.

Die Vernetzer V sind vorzugsweise im sauren pH-Bereich hydrolysestabil, insbesondere bei pH-Werten < 5, besonders bevorzugt bei pH-Werten <3.

Besonders bevorzugte Vernetzer V tragen die vorstehend beschriebenen vernetzenden Gruppen B und/oder B', welche mit den vemetzenden Gruppen des Polymerisats P unter der Ausbildung kovalenter Bindungen reagieren. Ganz besonders bevorzugt sind Vernetzer V mit thermisch und gegebenenfalls zusätzlich durch Einwirkung von Strahlung vernetzenden Gruppen B und/oder B'.

In einer weiteren besonders bevorzugten Ausführungsform der Erfindung tragen die Vernetzer V zusätzlich zu den vernetzenden Gruppen B und/oder B' Liganden L, die identisch mit und/oder unterschiedlich von den Liganden L des Polymerisats P sein können.

Besonders gut geeignete vernetzende funktionelle Gruppen B und B' für die Vernetzer V sind:
- insbesondere Hydroxylgruppen,
- insbesondere Aldehydgruppen,
- Azidgruppen,
- Säureanhydridgruppen, insbesondere Carbonsäureanhydridgruppen,
- Carbamatgruppen,
- Harnstoffgruppen,
- insbesondere Isocyanatgruppen, welche ganz besonders bevorzugt mit Blockierungsmitteln umgesetzt sind, welche bei den Einbrenntemperaturen der erfindungsgemäßen Beschichtungsmitteln deblockieren und/oder ohne Deblockierung in das sich bildende Netzwerk eingebaut werden,
- (Meth)acrylatgruppen,
- Vinylgruppen
oder Kombinationen hiervon.

Ganz besonders bevorzugt als Vernetzer V sind verzweigte und/oder hyperverzweigte Polyisocyanate, die zumindest teilweise blockiert sind und die zusätzlich Liganden L tragen.

In einer weiteren Ausführungsform der Erfindung tragen die Vernetzer V Gruppen B und/oder B', welche in der Lage sind, mit den Liganden L des Polymerisats P kovalente Bindungen auszubilden.

Als kontinuierliche Phase wird für das Beschichtungsmitte EK Wasser verwendet, bevorzugt entionisiertes und/oder destilliertes Wasser. Als weitere bevorzugte Komponente wird mindestens eine zur Oxidation befähigte Säure solchermaßen eingesetzt, daß der pH-Wert des Beschichtungsmittels EK vorzugsweise zwischen 1 und 5, bevorzugt zwischen 2 und 4 liegt. Besonders bevorzugte Säuren sind ausgewählt aus der Gruppe der oxidierenden Mineralsäuren, wie insbesondere Salpetersäure, salpetrige Säure, Schwefelsäure und/oder schweflige Säure. Zur Einstellung des pH-Werts kann, sofern nötig, ein Puffermedium eingesetzt werden, wie beispielsweise Salze starker Basen und schwacher Säuren, wie insbesondere Ammoniumacetat.

In einer besonders bevorzugten Ausführungsform der Erfindung enthält das Beschichtungsmittel EK zusätzlich ein Salz, welches als kationischen Bestandteil Lanthanidmetallkationen und/oder d-Metallkationen aufweist.

Bevorzugte Lantanidmetallkationen sind Lanthan-, Cer-, Praseodym-, Neodym-, Promethium-, Samarium-, Europium- und/oder Dysprosiumkationen. Ganz besonders bevorzugt sind Lanthan-, Cer- und Praseodymkationen. Die Lanthanidmetallkationen können in ein-, zwei- und/oder dreiwertiger Oxidationsstufe vorliegen, wobei die dreiwertige Oxidationstufe bevorzugt ist.

Bevorzugte d-Metalikationen sind Titan-, Vanadium-, Mangan-, Yttrium-, Zirkon-, Niob-, Molybdän-, Wolfram-, Kobalt-, Ruthenium-, Rhodium-, Palladium-, Osmium- und/oder Iridiumkationen. Als d-Elementkation ausgenommen ist das Chromkation in allen Oxidationsstufen. Ganz besonders bevorzugt sind Vanadium-, Mangan-, Wolfram-, Molybdän- und/oder Yttriumkationen. Die d-Elementkationen können in ein- bis sechswertiger Oxidationsstufe vorliegen, wobei eine drei- bis sechswertige Oxidationsstufe bevorzugt ist:

**Das erfindungsgemäße Korrosionsschutzverfahren**

Das solchermaßen vorbehandelte Substrat wird in der ersten stufe der erfindungsgemäßen Korrosionsschutz Vefahrens mit dem Korrosionsschutzmittel K und in des zweiten stufe mit dem Korrosionsschutzmittel EK in Kontakt gebracht. Dies erfolgt vorzugsweise durch Eintauchen oder Durchziehen des Substrats in beziehungsweise durch ein Bad, enthaltend EK bezichungsweise K. Die Verweilzeiten des Substrats betragen 1 Sekunde bis 15 Minuten, bevorzugt 10 Sekunden bis 10 Minuten und besonders bevorzugt 30 Sekunden bis 8 Minuten. Die Temperatur des Bads enthaltend EK bezichungsweise K liegt zwischen 20 und 90 °C, bevorzugt zwischen 25 und 80 °C, besonders bevorzugt zwisehen 30 und 70 °C.

Nach der Behandlung des Substrats mit dem Korrosionsschulzmittel K und erfindungsgemäßen Beschichtungsmittel EK wird vorzugsweise eine Trocknung des Verbunds aus Substrat und Beschichtungsmittel bei Temperaturen zwischen ca. 30 und 200 °C, insbesondere zwischen 100 und 180 °C durchgeführt, wobei die Trocknungsapparatur für die vorteilhafte Wirkung des erfindungsgemäßen Beschichtungsmittels EK als weitgehend unkritisch angesehen werden kann. Sind die vemetzenden Gruppen B und/oder B' zumindest teilweise strahlenhärtend, wird, gegebenenfalls zusätzlich zur thermischen Behandlung, eine Bestrahlung der Schicht aus dem erfindungsgemäßen Beschichtungsmittel EK, vorzugsweise in dem Fachmann bekannter Weise mit aktinischer Strahlung und/oder mit Elektronenstrahlung, durchgeführt.

Das erfindungsgemäße verfahren kann überraschenderweise auf einem großen Spektrum von Substraten zur Anwendung kommen und ist weitgehend vom Redoxpotential des Substrats unabhängig. Bevorzugte Substratmaterialien sind Zink, Eisen, Magnesium und Aluminium, sowie deren Legierungen, wobei die vorgenannten Metalle bevorzugt zu mindestens 20 Gew.-% in den Legierungen vorhanden sind. Vorzugsweise sind die Substrate als Bleche ausgeformt, wie sie beispielsweise in der Automobilindustrie, der Bauindustrie sowie der Maschinenbauindustrie zum Einsatz kommen. Die mit dem erfindungsgemäßen verfahren beschichteten Bleche kommen insbesondere bei Formblechen sowie bei der Bandbeschichtung (Coil-Coating) von Blechen zum Einsatz.

In einer ganz besonders bevorzugten Ausführungsform der Erfindung erfindungsgemäße Verfahren zur Versiegelung von Schnittkanten der oben beschriebenen Bleche eingesetzt, insbesondere zur Versiegelung der Schnittkanten von schon beschichteten Blechen.

Im ersten Schritt des erfindungsgemäßen verfahrens ein wäßriges Korrosionsschutzmittel K mit einem pH-Wert zwischen 1 und 5 aufgetragen, welches mindestens eine Verbindung AA mit einem Lanthanid-Metall als Kation und/oder einem d-Element-Metall mit Ausnahme von Chrom als Kation und/oder einem d-Element-Metallat mit Ausnahme von chromhaltigen Metallaten als anion sowie BB mindestens zur Oxidation befähigten Säure mit Ausnahme von phosphorhaltigen und/oder chromhaltigen Säuren enthält.

Das die Komponente AA bildende Salz weist als kationischen Bestandteil Lanthanidmetallkationen und/oder d-Metallkationen auf. Bevorzugte Lantanidmetallkationen sind Lanthan-, Cer-, Praseodym-, Neodym-, Promethium-, Samarium-, Europium- und/oder Dysprosiumkationen. Ganz besonders bevorzugt sind Lanthan-, Cer- und Praseodymkationen. Die Lanthanidmetallkationen können in ein-, zwei- und/oder dreiwertiger Oxidationsstufe vorliegen, wobei die dreiwertige Oxidationstufe bevorzugt ist.

Bevorzugte d-Metallkationen sind Titan-, Vanadium-, Mangan-, Yttrium-, Zirkon-, Niob-, Molybdän-, Wolfram-, Kobalt-, Ruthenium-, Rhodium-, Palladium-, Osmium- und/oder Iridiumkationen. Als d-Elementkation ausgenommen ist das Chromkation in allen Oxidationsstufen. Ganz besonders bevorzugt sind Vanadium-, Mangan-, Wolfram-, Molybdän- und/oder Yttriumkationen. Die d-Elementkationen können in ein- bis sechswertiger Oxidationsstufe vorliegen, wobei eine drei- bis sechswertige Oxidationsstufe bevorzugt ist.

Die Salze der vorgenannten Kationen der Komponente AA sind vorzugsweise in Wasser sehr gut löslich. Besonders bevorzugt sind Salze [Kation]n[Anion]m (mit n,m >= 1) mit einem Löslichkeitsprodukt LP = [Kation]ⁿ *[Anion]^{m} > 10⁻⁸ * mol^{(n+m)}/l^{(n+m)}, ganz besonders bevorzugt Salze mit einem Löslichkeitsprodukt LP > 10⁻⁶ * mol^{(n+m)}/l^{(n+m)}. In einer ganz besonders bevorzugten Ausführungsform der Erfindung liegt beträgt die Konzentration des oder der Salze (A) im Korrosionsschutzmittel 10⁻¹ bis 10⁻⁴ mol/l, insbesondere 5*10⁻¹ bis 10⁻³ mol/l.

Die mit den d-Elementkationen die Salze AA bildenden Anionen werden bevorzugt solchermaßen ausgewählt, daß die vorgenannten Bedingungen für das Löslichkeitsprodukt P gegeben sind. Bevorzugt werden Anionen oxidierender Säuren der Elemente der VI., VII. und VIII. Nebengruppe des Periodensystems der Elemente sowie Anionen oxidierender Säuren der Elemente der V. und VI. Hauptgruppe des Periodensystems der Elemente mit Ausnahme von Anionen oxidierender Säure von Phosphor und Chrom eingesetzt, wie insbesondere Nitrate, Nitrite, Sulfite und/oder Sulfate. Weiterhin bevorzugt als Anionen sind Halogenide, wie insbesondere Chloride und Bromide.

In einer weiteren bevorzugten Ausführungsform der Erfindung können die d-Elementkationen auch als Komplexe mit ein- und/oder mehrzähnigen potentiell anionischen Liganden vorliegen. Bevorzugte Liganden sind gegebenenfalls funktionalisierte Terpyridine, gegebenenfalls funktionalisierte Harnstoffe und/oder Thioharnstoffe, gegebenenfalls funktionalisierte Amine und/oder Polyamine, wie insbesondere EDTA, Imine, wie insbesondere iminfunktionalisierte Pyridine, Organoschwefelverbindungen, wie insbesondere gegebenenfalls funktionalisierte Thiole, Thiocarbonsäuren, Thioaldehyde, Thioketone, Dithiocarbamate, Sulfonamide, Thioamide und besonders bevorzugt Sulfonate, gegebenenfalls funktionalisierte Organoborverbindungen, wie insbesondere Borsäureester, gegebenenfalls funktionalisierte Polyalkohole, wie insbesondere Kohlenhydrate und deren Derivate sowie Chitosane, gegebenenfalls funktionalisierte Säuren, wie insbesondere Di- und/oder oligofunktionelle Säuren, gegebenenfalls funktionalisierte Carbene, Acetylacetonate, gegebenenfalls funktionalisierte Acetylene, gegebenenfalls funktionalisierte Carbonsäuren, wie insbesondere Carbonsäuren, die ionisch und/oder koodinativ an Metallzentren gebunden werden können, sowie Phytinsäure und deren Derivate.

Ganz besonders bevorzugt sind als Liganden Phytinsäure, deren Derivate und Sulfonate, die gegebenenfalls funktionalisiert sind.

In einer weiteren Ausführungsform der Erfindung enthalten die Salze AA d-Element-Metallate als Anionen, die gemeinsam mit den d-ElementKationen oder auch für sich allein das Salz AA bilden können. Bevorzugte d-Elemente für die Metallate sind Vanadium, Mangan, Zirkon, Niob, Molybdän und/oder Wolfram. Ganz besonders bevorzugt sind Vanadium, Mangan, Wolfram und/oder Molybdän. Als d-Element-Metallat ausgenommen sind Chromate in allen Oxidationsstufen. Besonders bevorzugte d-Element-Metallate sind Oxoanionen, wie insbesondere Wolframate, Permanganate, Vanadate und/oder Molybdate.

Bilden die d-Element-Metallate für sich allein, das heißt ohne Lanthanidmetallkationen und/oder d-Metallkationen das Salz AA, so gilt für das bevorzugte Löslichkeitsprodukte LP solcher Salze das Vorgesagte. Bevorzugte Kationen solcher Salze sind gegebenenfalls mit organischen Resten substituierte Ammoniumionen, Phosphoniumionen und/oder Sulfoniumionen, Alkalimetallkationen, wie insbesondere Lithium, Natrium und/oder Kalium, Erdalkalimetallkationen, wie insbesondere Magnesium und/oder Kalzium. Besonders bevorzugt sind die gegebenenfalls mit organischen Resten substituierten Ammoniumionen und die Alkalimetallkationen, die ein besonders hohes Löslichkeitsprodukt LP des Salzes AA gewährleisten.

Als Komponente BB des Korrosionsschutzmittels K wird mindestens eine zur Oxidation befähigte Säure solchermaßen eingesetzt, daß der pH-Wert des Korrosionsschutzmittel zwischen 1 und 5, bevorzugt zwischen 2 und 4 liegt. Bevorzugte Säuren BB sind ausgewählt aus der Gruppe der oxidierenden Mineralsäuren, wie insbesondere Salpetersäure, salpetrige Säure, Schwefelsäure und/oder schweflige Säure.

Zur Einstellung des pH-Wert kann, sofern nötig, ein Puffermedium eingesetzt werden, wie beispielsweise Salze starker Basen und schwacher Säuren, wie insbesondere Ammoniumacetat.

Als kontinuierliche Phase wird für die Korrosionsschutzmittel K und EK Wasser verwendet, bevorzugt entionisiertes und/oder destilliertes Wasser.

Vor der Applikation des Korrosionschutzmittels K wird das Substrat in einer bevorzugten Ausführungsform der Erfindung gereinigt, insbesondere von öligen und fettigen Rückständen, wobei bevorzugt Detergenzien und/oder alkalische Reinigungsmittel zur Anwendung kommen. In einer weiteren bevorzugten Ausführung der Erfindung wird nach der Reinigung mit Detergenzien und/oder alkalischen Reinigungsmitteln vor der Applikation des Korrosionschutzmittels K nochmals mit Wasser nachgespült. Zur Entfernung von Ablagerungen und/oder chemisch modifizierter, insbesondere oxidierter, Schichten an der Oberfläche des Substrats wird in einer weiteren bevorzugten Ausführungsform der Erfindung vor dem Nachspülschritt noch eine mechanische Reinigung der Oberfläche, beispielsweise mit Schleifmedien, und/oder eine chemische Entfernung der Oberflächenschichten, beispielsweise mit deoxidierenden Reinigungsmitteln, erfolgen.

Das solchermaßen vorbehandelte Substrat wird mit dem Korrosionschutzmittel K in Kontakt gebracht: Dies erfolgt vorzugsweise durch Eintauchen oder Durchziehen des Substrats in beziehungsweise durch ein Bad, enthaltend das Korrosionschutzmittel K. Die Verweilzeiten des Substrats im Korrosionschutzmittel K betragen vorzugsweise 1 Sekunde bis 10 Minuten, bevorzugt 10 Sekunden bis 8 Minuten und besonders bevorzugt 30 Sekunden bis 6 Minuten. Die Temperatur des Bads enthaltend das Komosionschutzmittel K liegt vorzugsweise zwischen 25 und 90 °C, bevorzugt zwischen 30 und 80 °C, besonders bevorzugt zwischen 35 und 70 °C.

Nach der Behandlung, des Substrats mit dem Korrosionsschutzmittel K wird vorzugsweise eine Trocknung des Verbunds aus Substrat und Komosionsschutzmittel durch Trockenblasen oder durch Trocknung bei Temperaturen zwischen ca. 30 und 200 °C durchgeführt, wobei die Trocknungstemperatur sowie die Trocknungsart bzw. -apparatur für die vorteilhafte Wirkung des Korrosionschutzmittels K als weitgehend unkritisch angesehen werden kann.

Im zweiten Schritt des erfindungsgemäßen Verfahrens werden die mit dem Korrosionschutzmittels K beschichteten Substrate mit dem Beschichtungsmittel EK beschichtet. Dies erfolgt vorzugsweise durch Eintauchen oder Durchziehen des beschichteten Substrats in beziehungsweise durch ein Bad, enthaltend das Beschichtungsmittel EK. Die Verweilzeiten des Substrats im Beschichtungsmittel EK betragen vorzugsweise 1 Sekunde bis 15 Minuten, bevorzugt 10 Sekunden bis 10 Minuten und besonders bevorzugt 30 Sekunden bis 8 Minuten. Die Temperatur des Bads enthaltend das Beschichtungsmittel EK liegt vorzugsweise zwischen 20 und 90 °C, bevorzugt zwischen 25 und 80 °C, besonders bevorzugt zwischen 30 und 70 °C.

Nach der Behandlung des Substrats mit dem Beschichtungsmittel EK wird vorzugsweise eine Trocknung des Verbunds aus Substrat und den Schichten aus den Korrosionsschutzmittel K sowie dem Beschichtungsmittel EK bei Temperaturen zwischen ca. 30 und 200 °C, insbesondere zwischen 100 und 180 °C durchgeführt, wobei die Trocknungsapparatur für die vorteilhafte Wirkung des Beschichtungsmittel EK als weitgehend unkritisch angesehen werden kann. Sind die vemetzenden Gruppen B und/oder B' zumindest teilweise strahlenhärtend, wird, gegebenenfalls zusätzlich zur thermischen Behandlung, eine Bestrahlung der Schicht aus dem Beschichtungsmittel EK, vorzugsweise in dem Fachmann bekannter Weise mit aktinischer Strahlung und/oder mit Elektronenstrahlung, durchgeführt.

Die im folgenden angeführten Beispiele sollen die Erfindung weiter veranschaulichen.

### Beispiele

### Beispiel 1: Herstellung des ersten Beckens mit dem Korrosionsschutzmittel K

In einem Liter Wasser werden 1,77g (0,01 mol) Ammoniummolybdat-Tetrahydrat gelöst. Die Lösung wird mittels Salpetersäure auf einen pH = 2,5 eingestellt. Gegebenfalls wird zur Einstellung des vorgenannten pH-Werts mit wäßrigen Ammoniak-Lösung gegengepuffert.

### Beispiel 2a: Synthese der Polymerkomponente P für das Beschichtungsmittel EK

Es werden 5g (6,25*10⁻³ mol) eines Polyethylenimins mit einem mittleren Molekulargewicht Mw = 800 g/mol (Lupasol FG der Fa. BASF AG, Verhältnis von primären:sekundären:tertiären Aminogruppen (p-s-t): 1:0,9:0,5) in 100g Ethanol unter Stickstoffatmosphäre vorgelegt und bei 75°C innerhalb von 45 Minuten mit 10,7 g (0,066 mol) Benzoylisothiocyanat gelöst in 86 g Ethanol versetzt. Man läßt noch 4h bei dieser Temperatur rühren und setzt das Produkt ohne weitere Reinigung ein.

### Beispiel 2b: Synthese der Vernetzer V für das Beschichtungsmittel EK

Es werden 3,1g (0,008 mol) Cer(III)chforid Heptahydrat in 50 ml Wasser vorgelegt. Es wird eine Lösung aus 4,1g(0,025 mol) 4-Hydroxyzimtsäure und 1g (0,025 mol) Natronlauge in 50 ml Wasser hergestellt und mit Salzsäure auf pH=7,9 gebracht. Diese Lösung wird langsam zur Der-Lösung gegeben, so daß der pH-Wert der Cer-Lösung nicht über 6 steigt. Der Niederschlag wird mit Ethanol und Wasser gewaschen. 1,7 g (0,003 mol) dieses Cer-Komplexes wird zusammen mit 9,1g (2.5% NCO-Gehalt) eines verzweigten und zu 75% mit Dimethylpyrazol blokkierten Polyisocyanats (Bayhydur VP LS 2319 der Fa.Bayer AG) in 80,1g Ethylacetat und 0,7 g einer OH-funktionellen Dipropylentriamins. (Jeffcat-ZR 50 der Fa. Huntsmann) für fünf Stunden bei 40°C zur Reaktion gebracht. Das Produkt wird ohne weitere Reinigung eingesetzt.

### Beispiel 2: Herstellung des zweiten Beckens mit dem Beschichtungsmittel EK

In einem Liter Wasser werden 3g der Polymerkomponente P gemäß Beispiel 2a und 2g des Vernetzers V gemäß Beispiel 2b gelöst. Die Lösung wird mittels Salpetersäure auf einen pH = 2,5 eingestellt. Gegebenfalls wird zur Einstellung des vorgenannten pH-Werts mit wäßrigen Ammoniak-Lösung gegengepuffert.

### Beispiel 3: Beschichtung des Substrats mit dem Korrosionsschutzmittel K und dem Beschichtungsmittel EK

Das Substrat (Blech aus verzinktem Stahl) wird 5 Minuten bei 55°C in einer Reinigungslösung (Ridoline C72 der Fa. Henkel) gereinigt und danach mit destilliertem Wasser abgespült.

Anschließend wird das mit destilliertem Wasser abgespülte Blech sofort bei 45°C für 4 Minuten in das erste Becken des Korrosionsschutzmittels K gemäß Beispiel 1 eingetaucht. Danach wird das beschichtete Blech mit destilliertem Wasser abgespült und mit Stickstoff trockengeblasen. Direkt anschließend werden die Bleche für 5 Minuten bei 35°C in das zweite Becken des Beschichtungsmittel EK gemäß Beispiel 2 eingetaucht. Danach wird das beschichtete Blech mit destilliertem Wasser abgespült und mit Stickstoff trockengeblasen. Das Blech wird danach für 30 Minuten bei 150°C getrocknet.

Das solchermaßen beschichtete Blech und die nachgenannten Referenzproben werden mit einer Blechschere geschnitten, um auf allen Blechen freie Kanten zu erhalten.

Als Referenz für das erfindungsgemäße wird Gardobond 958 54 (Fa.Chemetall GmbH: verzinktes Stahlblech mit Phosphatierung und Nachspülung mit Zirkoniumhexafluorid-Lösung) verwendet:

### Beispiel 4: Schnellkorrosionstest mit 3%-iger wäßriger Natriumchloridlösung an den gemäß Beispiel 3 beschichteten Substraten

Es wird eine Lösung von 3% Natriumchlorid in vollentsalztem Wasser eingesetzt. Als Substrate können hier Stahl, verzinkter Stahl oder Zinklegierungen genutzt werden. Für Aluminium und seine Legierungen wird die Natriumchlorid-Lösung zusätzlich mit Essigsäure auf einen pH = 3 eingestellt. Die Proben (3*3 cm) werden in 170 ml dieser Lösung eingetaucht und werden in einem Exsikkator bei nahezu 100% Feuchte gelagert. Die feuchte Atmosphäre wird durch fettfreie Preßluft erzeugt, die durch zwei Waschflaschen mit vollentsalztem Wasser geleitet wird und anschließend durch den Exsikkator strömt. Durch diesen Aufbau wird eine konstante Luftfeuchte sowie ein konstanter Kohlendioxidgehalt gewährleistet, wobei die Temperatur auf 25°C gehalten wird. Die Proben werden vor dem Eintauchen auf einer Analysenwaage gewogen. Nicht behandelte Referenzbleche (Stahl, verzinkter Stahl) werden für 5 Minuten in Ethanol im Ultraschallbad gereinigt. Nach 24 Stunden Lagerung werden die Bleche aus der Lösung entnommen und mit einer Einwegpipette über dem Becherglas mit der belasteten 3%igen Natriumchlorid-Lösung abgespült (ca. 10ml Natriumchlorid-Lösung je Probenseite). Das Blech wird anschließend mit Stickstoff trocken geblasen und für 15 Minuten bei 50°C getrocknet und gewogen. Das Blech wird anschließend erneut in eine frische Natriumchlorid-Lösung gleicher Konzentration gehangen. Die gebrauchte Natriumchlorid-Lösung wird mit 1 ml einer 32%igen Salzsäure versetzt, um eventuell vorhandene Niederschläge zu lösen. Die erhaltene klare Lösung wird mittels ICP-OES (Inductively coupled Plasma - Optical Emission Spectrometry) auf den Gehalt an Substratmetall (Zn, Fe, Al, Mg) vermessen.

Die oben beschriebene Prozedur wird nach 24h, 72h, 96h und 168h wiederholt. Die Messung wird durch eine Doppelbestimmung verifiziert.

### Auswertung des Korrosionstests:

### a) ICP-OES Daten der Immersionslösung

Die ICP-OES Daten werden auf die Fläche der Proben normiert. Diese Daten ergeben einen linearen Verlauf. Aufgrund der Linearität der Korrosionskinetik, können die unterschiedlichen Beschichtungen durch die Steigungen des Graphen verglichen werden. Die ICP-OES Daten geben die Auflösung des Substrates pro Fläche und Zeit wieder und sind somit ein direktes Maß für die Korrosionsrate die bei einer jeweiligen Beschichtung möglich ist.

### b) Wägung der Proben

Die Wägungen geben darüber hinaus noch Informationen über die Möglichkeiten in wieweit die Beschichtung eine Passivierung der Oberfläche möglich macht oder nicht. Hierzu wird der Gewichtsverlust in Molaritäten umgerechnet und auf die Fläche der Proben normiert. Zum Vergleich der Korrosionskinetiken dient das jeweilige Substrat, welches lediglich alkalisch gereinigt wurde. Dargestellt werden dann die Steigungen aus den ICP-OES-Daten im Vergleich zur Null-Referenz (reines Substrat) und anderen Referenzen.

**Tabelle 1: Ergebnisse des Korrosionstests**

| Substrat | ICP-OES-Daten (10⁻⁴ *mol/l *h*cm²) |
|---|---|
| Verzinktes Stahlblech (unbeschichtet) | 8,136 |
| | |
| Verzinktes Stahlblech beschichtet gemäß Beispiel 3 | 4,580 |
| | |
| Gardobond 958 54 (Referenz) | 6,171 |

Die Ergebnisse der Korrosionstests zeigen deutlich die Überlegenheit des erfindungsgemäßen Beschichtungsverfahrens gegenüber einem herkömmlichen Korrosionsschutz (Referenz).

## Patentansprüche

1. Zweistufiges Verfahren zur Korrosionsschutzausrüstung metallischer Substrate, **dadurch gekennzeichnet, daß**
(a) in einer ersten Stufe das Substrat in ein Bad eines Korrosionsschutzmittels K getaucht wird, welches eine Konversion an der Substratoberfläche bewirkt, wobei das Korrosionsschutzmittel K mindestens eine Verbindung mit einem Lanthanid-Metall als Kation und/oder einem d-Element-Metall mit Ausnahme von Chrom als Kation und/oder einem d-Element-Metallat mit Ausnahme von chromhaltigen Metallaten als Anion sowie mindestens eine zur Oxidation befähigte Säure mit Ausnahme von phosphorhaltigen und/oder chromhaltigen Säuren enthält, und
(b) in einer zweiten Stufe das gemäß Stufe (a) behandelte Substrat in ein wäßriges Beschichtungsmittel EK für metallische Substrate enthaltend ein wasserdispergierbares und/oder wasserlösliches Polymerisat P mit kovalent gebundenenen Liganden A, welche mit den bei der Korrosion des Substrats freigesetzten Metallionen und/oder der Substratoberfläche Chelate bilden, sowie mit vemetzenden funktionellen Gruppen B, die mit sich selbst, mit weiteren komplementären funktionellen Gruppen B' des Polymerisats P und/oder mit weiteren funktionellen Gruppen B und/oder B' an Vemetzem V kovalente Bindungen ausbilden können, getaucht wird,
wobei das Substrat in den Stufen (a) und (b) während einer Dauer von 1 Sekunde bis 15 Minuten bei einer Temperatur zwischen 20 und 90 °C in die Bäder der Beschichtungsmittel K und EK getaucht wird.

2. Zweistufiges Verfahren zur Korrosionsschutzausrüstung metallischer Substrate gemäß Anspruch 1, **dadurch gekennzeichnet, daß** die Vernetzer V kovalent gebundene Liganden A aufweisen.

3. Zweistufiges Verfahren zur Korrosionsschutzausrüstung metallischer Substrate nach Anspruch 1 oder 2, **dadurch gekennzeichnet, daß** die Liganden A ausgewählt sind aus der Gruppe Harnstoffe, Amine, Amide, Imine, Imide, Pyridine, Organoschwefelverbindungen, Organophosphorverbindungen, Organoborverbindungen, Oxime, Acetylacetonate, Polyalkohole, Säuren, Phytinsäuren, Acetylene und/oder Carbene.

4. Zweistufiges Verfahren zur Korrosionsschutzausrüstung metallischer Substrate nach einem der Ansprüche 1 bis 3, **dadurch gekennzeichnet, daß** das Polymerisat P und der Vernetzer V vernetzende Gruppen B und/oder B' enthält, die thermisch und/oder strahlenvemetzbar sind.

5. Zweistufiges Verfahren zur Korrosionsschutzausrüstung metallischer Substrate nach einem der Ansprüche 1 bis 4, **dadurch gekennzeichnet, daß** das Polymerisat P als Polymerrückgrat einen oder mehrere Bausteine ausgewählt aus der Gruppe Polyester, Polyacrylate, Polyurethane, Polyolefine, Polyalkohole, Polyvinylether, Polyvinylamine und Polyalkylenimin aufweist.

6. Zweistufiges Verfahren zur Korrosionsschutzausrüstung metallischer Substrate nach einem der Ansprüche 1 bis 5, **dadurch gekennzeichnet, daß** das Substrat nach der Abscheidung der Beschichtungsmittel K und EK thermisch bei Temperaturen zwischen 50 und 200 °C und/oder durch Bestrahlung nachbehandelt wird.

7. Zweistufiges Verfahren zur Korrosionsschutzausrüstung metallischer Substrate nach einem der Ansprüche 1 bis 6, **dadurch gekennzeichnet, daß** das Substrat mindestens 20 Gew.-% eines Metalles enthält, das aus der Gruppe Fe, Al und/oder Zn ausgewählt ist.

## Claims

1. Two-stage process for the corrosion-control treatment of metallic substrates, **characterized in that**
(a) in a first stage the substrate is immersed in a bath of a corrosion preventative K, which results in conversion at the substrate surface, the corrosion preventative K comprising at least one compound having as its cation a lanthanide metal and/or as its cation a d-element metal with the exception of chromium, and/or having as its anion a d-element metallate, with the exception of metallates containing chromium, and also at least one acid capable of oxidation, with the exception of acids containing phosphorus and/or containing chromium, and
(b) in a second stage the substrate treated as per stage (a) is immersed in an aqueous coating material EK for metallic substrates, comprising a water-dispersible and/or watersoluble polymer P having covalently bonded ligands A, which form chelates with the metal ions released during the corrosion of the substrate and/or with the substrate surface, and having crosslinking functional groups B, which are able to form covalent bonds with themselves, with further, complementary functional groups B' of the polymer P and/or with further functional groups B and/or B' on crosslinkers V,
the substrate being immersed in the baths of the coating materials K and EK in stages (a) and (b) for a time of 1 second to 15 minutes and at a temperature between 20 and 90°C.

2. Two-stage process for the corrosion-control treatment of metallic substrates according to Claim 1, **characterized in that** the crosslinkers V comprise covalently bonded ligands A.

3. Two-stage process for the corrosion-control treatment of metallic substrates according to Claim 1 or 2, **characterized in that** the ligands A are selected from the group consisting of ureas, amines, amides, imines, imides, pyridines, organosulphur compounds, organophosphorus compounds, organoboron compounds, oximes, acetylacetonates, polyalcohols, acids, phytic acids, acetylenes and/or carbenes.

4. Two-stage process for the corrosion-control treatment of metallic substrates according to any of Claims 1 to 3, **characterized in that** the polymer P and the crosslinker V comprise crosslinking groups B and/or B' which are crosslinkable thermally and/or by means of radiation.

5. Two-stage process for the corrosion-control treatment of metallic substrates according to any of Claims 1 to 4, **characterized in that** the polymer P comprises as its backbone one or more building blocks selected from the group consisting of polyesters, polyacrylates, polyurethanes, polyolefins, polyalcohols, polyvinyl ethers, polyvinylamines and polyalkyleneimine.

6. Two-stage process for the corrosion-control treatment of metallic substrates according to any of Claims 1 to 5, **characterized in that**, following the deposition of the coating materials K and EK, the substrate is aftertreated thermally at temperatures between 50 and 200°C and/or by irradiation.

7. Two-stage process for the corrosion-control treatment of metallic substrates according to any of Claims 1 to 6, **characterized in that** the substrate comprises at least 20% by weight of a metal selected from the group consisting of Fe, Al and/or Zn.

## Revendications

1. Procédé à deux étapes pour la protection anticorrosion de substrats métalliques, **caractérisé en ce que**
(a) lors d'une première étape, le substrat est plongé dans un bain d'un agent protecteur anticorrosion K, qui provoque une conversion sur la surface du substrat, l'agent protecteur anticorrosion K contenant au moins un composé qui contient un métal des lanthanides en tant que cation et/ou un métal des éléments d à l'exception du chrome en tant que cation et/ou un métallate des éléments d à l'exception des métallates contenant du chrome en tant qu'anion, ainsi qu'au moins un acide apte à l'oxydation à l'exception des acides contenant du phosphore et/ou contenant du chrome, et
(b) lors d'une seconde étape, le substrat traité selon l'étape (a) est plongé dans un agent de revêtement aqueux EK pour substrats métalliques contenant un polymère P dispersible dans l'eau et/ou soluble dans l'eau qui comporte des ligands A reliés par des liaisons covalentes, qui forment des chélates avec les ions métalliques libérés lors de la corrosion du substrat et/ou la surface du substrat, et qui comporte des groupes fonctionnels réticulants B qui peuvent former des liaisons covalentes avec eux-mêmes, avec d'autres groupes fonctionnels B' complémentaires du polymère P et/ou avec d'autres groupes fonctionnels B et/ou B' sur des agents de réticulation V,
le substrat étant plongé pendant une durée de 1 seconde à 15 minutes à une température comprise entre 20 et 90 °C dans les bains des agents de revêtement K et EK lors des étapes (a) et (b).

2. Procédé à deux étapes pour la protection anticorrosion de substrats métalliques selon la revendication 1, **caractérisé en ce que** les agents de réticulation V comportent des ligands A reliés par des liaisons covalentes.

3. Procédé à deux étapes pour la protection anticorrosion de substrats métalliques selon la revendication 1 ou 2, **caractérisé en ce que** les ligands A sont choisis dans le groupe des urées, des amines, des amides, des imines, des imides, des pyridines, des composés organiques de soufre, des composés organiques de phosphore, des composés organiques de bore, des oximes, des acétylacétonates, des polyalcools, des acides, des acides phytiniques, des acétylènes et/ou des carbènes.

4. Procédé à deux étapes pour la protection anticorrosion de substrats métalliques selon l'une quelconque des revendications 1 à 3, **caractérisé en ce que** le polymère P et l'agent de réticulation V contiennent des groupes réticulants B et/ou B', qui sont réticulables thermiquement et/ou par rayonnements.

5. Procédé à deux étapes pour la protection anticorrosion de substrats métalliques selon l'une quelconque des revendications 1 à 4, **caractérisé en ce que** le polymère P comporte en tant que squelette polymère un ou plusieurs constituants choisis dans le groupe des polyesters, des polyacrylates, des polyuréthannes, des polyoléfines, des polyalcools, des polyvinyléthers, des polyvinylamines et des polyalkylène-imine.

6. Procédé à deux étapes pour la protection anticorrosion de substrats métalliques selon l'une quelconque des revendications 1 à 5, **caractérisé en ce que** le substrat est post-traité thermiquement à des températures comprises entre 50 et 200 °C et/ou par rayonnements après le dépôt des agents de revêtement K et EK.

7. Procédé à deux étapes pour la protection anticorrosion de substrats métalliques selon l'une quelconque des revendications 1 à 6, **caractérisé en ce que** le substrat contient au moins 20 % en poids d'un métal choisi dans le groupe Fe, Al et/ou Zn.
